# EUROPÄISCHE PATENTANMELDUNG

(11) **EP 1 710 534 A1**
(43) Veröffentlichungstag der Anmeldung: **11.10.2006**
(21) Anmeldenummer: 06090052.9
(22) Anmeldetag: 07.04.2006
(51) Int. Cl.: G01B 7/12, B21B 38/04

(54) **Sensoranordnung zur Identifizierung und Ortung von Metallstäben in einem Metallverarbeitungswerk**

(30) Priorität: 07.04.2005 DE 102005016813
(71) Anmelder: FACHHOCHSCHULE KOBLENZ, 56075 Koblenz-Oberwerth (DE)
(72) Erfinder: Himmel, Jörg, Prof. Dr.-Ing., 57271 Hilchenbach (DE); Sehestedt, Christian, 53489 Sinzig (DE)
(74) Vertreter: Müller, Wolfram Hubertus

(57) **Zusammenfassung**

Die Erfindung betrifft eine Sensoranordnung zur Identifizierung und Ortung von Metallstäben in einem Metallverarbeitungswerk, die mindestens einen elektromagnetischen Oszillator (1, 2) aufweist, der ein elektromagnetisches Wechselfeld in einem Raumgebiet (11, 21) einer Förderstraße (F) für die Metallstäbe (20) erzeugt, und die des weiteren zumindest ein Messgerät umfasst, das die Frequenz des elektromagnetischen Wechselfelds in Abhängigkeit von der Zeit misst. Dabei ist der mindestens eine Oszillator (1, 2) so nah an der Förderstraße (F) angeordnet, dass eine Positions- und/oder eine Oberflächenänderung und/oder die Geschwindigkeit eines Metallstabes (20) in dem Raumgebiet (1I, 2I) eine vom Messgerät messbare Änderung der Frequenz des Wechselfeldes in dem Raumgebiet (1I; 2I) bewirkt.

## Beschreibung

Die Erfindung betrifft eine Sensoranordnung zur Identifizierung und Ortung von Metallstäben in einem Metallverarbeitungswerk sowie einen Verfahren zur Identifizierung von Metallstäben in einem Metallverarbeitungswerk.

Im Produktionsprozess eines Metallverarbeitungswerks, wie z.B. eines Walzwerkes, werden Metallstäbe entlang einer Förderstraße befördert. Die Erkennung der Position der Metallstäbe im Produktionsverlauf bzw. auf der Förderstraße ist problematisch. Die Metallstäbe unterschiedlichster Legierung werden in glühendem Zustand oberhalb der Curie-Temperatur verformt und dann Schritt für Schritt in Abhängigkeit des gewünschten Endproduktes im Prozess abgekühlt und weiterbehandelt. Typische Produkte sind z.B. Halbzeuge aus Edelstahl oder Baustahl.

Von den Transport- und Umformvorgängen gehen erhebliche Gefahren für die Anlagenbediener und das Wartungspersonal aus. Jeder Störfall erzwingt einen manuellen Eingriff durch Wartungspersonal. Die "heißen" und verformten Stäbe mit einem Gewicht von bis zu einigen hundert Kilo blockieren dann die Anlage und müssen geborgen werden. Eine möglichst vollautomatische und optimale Steuerung und Regelung muss deshalb das Ziel der Anlagenautomatisierung sein. Leistungsfähige Sensoren für diesen sehr anspruchsvollen Anwendungsbereich sind dafür die Voraussetzung, die zugleich die genaue Position, die Geschwindigkeit und den Typ eines Metallstabes in dem Metallverarbeitungswerk detektieren können.

Produktionsprozesse dieser Art sind stark belastet durch Wasserdampf, Öldämpfe, Walzrückstände und Vibrationen. Die Temperaturen der Metallstäbe können bis 1100°C erreichen, aber auch unterhalb 200°C liegen. Einzelne Maschinenteile, die in Berührung mit einem Metallstab stehen, können trotz Kühlung ebenfalls hohe Temperaturen erreichen. Insbesondere die glühenden Stäbe sind in ihrer Geometrie leicht verformbar. Der Transportprozess entlang der Förderstraße muss aus diesem Grund hohen Anforderungen genügen, um die Qualität des Endproduktes gewährleisten zu können.

Mechanische Tastsensoren zur Überwachung von Metallstäben müssen den Temperaturen Stand halten und sind deshalb wegen des damit verbundenen Gewichtes ungeeignet.

Lichtschranken (auch mit LASER-Dioden) sind bei diesen Umgebungsbedingungen nur bedingt einsetzbar, weil die vertikale und horizontale Position der Stäbe in den Führungsrollen durch die Krümmungen der Stäbe bedingt varüert. Maßnahmen zum Schutz der Optik sind aufwendig und wartungsintensiv.

Bei der Verwendung von Infrarotsensoren wird beim Wechsel von "heißen" Stäben zu "kalten" Stäben kein verwendbares Signal erzeugt, da die Umgebung ebenfalls aufgeheizt ist. Diese Systeme werden heute schon mit erheblichem Aufwand eingehaust sowie gekühlt und dadurch geschützt.

Auf Basis von Absorption ionisierender Strahlung arbeiten Messverfahren, die jedoch eine sehr hohen Aufwand beim Umgang mit radioaktiven Strahlern erfordern.

Bislang erscheinen für diesen Bereich industrielle Entfernungsmesssensoren auf der Basis eines Mikrowellen-RADAR günstig zu sein. Eine solche Sensoranordnung kann wegen seiner großen Reichweite von ca. 30m mit einem ausreichendem Abstand montiert werden. Die Auflösung im mm-Bereich bietet genügend Sicherheit für eine sichere Identifizierung eines Metallstabes. Die handelsüblichen Sensoren genügen aber den zeitlichen Anforderungen nicht. Sie haben Antwortzeiten für die Messungen im Bereich von 0,5-3s.

Keines der angeführten Systeme erfüllt die Prozessanforderungen vollständig. Berücksichtigt man zusätzlich, dass nicht nur die Position des Stabes, sondern zusätzlich auch noch seine Geschwindigkeit und sein Durchmesser wichtige Messgrößen sind, vervielfacht sich der Aufwand mit den beschriebenen Systemen.

Der Erfindung liegt die Aufgabe zu Grunde, eine Sensoranordnung sowie ein Verfahren bereitzustellen, um unabhängig von den verwendeten Betriebstemperaturen und Betriebsbedingungen in zuverlässiger Weise mindestens eine Messgröße zu detektieren.

Diese Aufgabe wird erfindungsgemäß von einer Sensoranordnung mit den Merkmalen des Anspruchs 1 gelöst. Danach umfasst die Sensoranordnung mindestens einen elektromagnetischen Oszillator, der ein elektromagnetisches Wechselfeld in einem Raumgebiet einer Förderstraße für die Metallstäbe erzeugt, und zumindest ein Messgerät, das die Frequenz des elektromagnetischen Wechselfelds in Abhängigkeit von der Zeit misst. Der mindestens eine Oszillator ist so nahe an der Förderstraße angeordnet, dass eine Positions- und/oder eine Oberflächenänderung und/oder die Geschwindigkeit eines Metallstabes in dem Raumgebiet eine vom Messgerät messbare Änderung der Frequenz des Wechselfeldes in dem Raumgebiet bewirkt. Es werden also Änderungen der Frequenz bzw. Resonanzfrequenz durch das Messgerät erfasst und dann ausgewertet.

Unter einem elektromagnetischen Oszillator wird ein System verstanden, das ein elektromagnetisches Wechselfeld erzeugt.

Bevorzugt sind zwei elektromagnetische Oszillatoren vorgesehen, die hintereinander entlang einer Förderstraße für die Metallstäbe angeordnet sind und die ein elektromagnetisches Wechselfeld in zwei entlang der Förderstraße hintereinander angeordneten Raumgebieten erzeugen. Die Raumgebiete sind dabei so angeordnet, dass die Metallstäbe während des Verarbeitungsprozesses die Raumgebiete hintereinander durchlaufen, während sie auf der Förderstraße befördert werden. Das Messgerät misst die beiden Frequenzen, mit denen die beiden elektromagnetischen Oszillatoren die elektromagnetischen Wechselfelder erzeugen. Die Oszillatoren sind dabei so nah an der Förderstraße angeordnet, dass eine Positions- und/oder eine Oberflächenänderung eines Metallstabes in einem der beiden Raumgebiete eine vom Messgerät messbare Änderung der Frequenz des Wechselfeldes in dem Raumgebiet bewirkt.

Die Schwingungsfrequenz der Oszillatoren wird davon beeinflusst, ob ein Metallstab in der Nähe des Oszillators angeordnet ist oder nicht. Die Metallstäbe sind elektrisch leitfähig und beeinflussen daher die Schwingungsfrequenz der beiden Oszillatoren. Bei der Beförderung durch die Förderstraße durchlaufen die Metallstäbe die Raumgebiete, in denen die Oszillatoren ein elektromagnetisches Wechselfeld erzeugen und in denen die Metallstäbe zugleich die Schwingungsfrequenz des jeweiligen Oszillators beeinflussen.

Je nach Oberfläche, insbesondere je nach Durchmesser des Metallstabes, wird die Frequenz eines Oszillators unterschiedlich stark durch seine Anwesenheit beeinflusst. Eine exakte Oberflächenbestimmung der Metallstäbe durch die Sensoranordnung ist dabei nicht nötig, da es für den Verarbeitungsprozess ausreicht, den auf der Förderstraße befindlichen Metallstabtyp zu identifizieren. Durch das Messmittel wird dabei eine Oberflächenänderung des gesamten Metallstabvolumens registriert, dass sich im jeweiligen Raumgebiet befindet. Wird ein einmal vollständig eingeführter Metallstab konstanter Dicke durch das Raumgebiet befördert, ändert sich die Frequenz so lange nicht mehr wesentlich, bis der Metallstab wieder aus dem Raumgebiet herausgeführt wird.

Durch die Messung der zeitabhängigen Schwingungsfrequenz sowie - bei zwei Spulen - der Anordnung der entsprechenden Raumgebiete hintereinander kann durch die Sensoranordnung nicht nur die Position, sondern auch die Geschwindigkeit der Metallstäbe auf der Förderstraße bestimmt werden.

Die erfindungsgemäße Sensoranordnung hat den Vorteil, dass zumindest drei Messgrößen mit nur einer Sensoranordnung bestimmt werden können: Typ, Position und - bei zwei Spulen - Geschwindigkeit des Metallstabes. Dabei ist das Messergebnis unabhängig von der speziellen Materialart (solange sie ausreichend leitend ist) und vor allen Dingen von der Temperatur. Die Sensoranordnung ist sowohl bei niedrigen als auch bei sehr hohen Temperaturen einsetzbar, sogar bei Temperaturen oberhalb der Curietemperatur.

Weiterhin stellt die erfindungsgemäße Sensoranordnung eine sehr kompakte Lösung dar, mit der Metallverarbeitungswerkstätten einfach nachgerüstet werden können.

Bevorzugt sind der oder die Oszillatoren dabei so nah an der Förderstraße angeordnet, dass sowohl eine Positions- als auch eine Oberflächen änderung eines Metallstabes in einem der beiden Raumgebiete eine von dem Messgerät messbare Veränderung der Impedanz des jeweiligen Oszillators und somit der Frequenz des vom Oszillator erzeugten Wechselfeldes bewirkt. Da die Frequenz des Oszillators abhängig von der Impedanz ist, kann somit die Positions- bzw. Oberflächenänderung durch das Messgerät registriert werden.

In einer besonders bevorzugten Ausführungsform weisen der oder die Oszillatoren jeweils eine Spule als frequenzbestimmendes Glied auf, wobei die Spulen das elektromagnetische Wechselfeld erzeugen. Spulen eignen sich besonders gut zum Erzeugen eines elektromagnetischen Wechselfeldes und sind dabei in ihrer Herstellung billig.

Dabei weist die mindestens eine Spule bevorzugt eine oder mehrere Windungen auf, die um die Förderstraße herum ausgebildet sind. Die Beförderung der Metallstäbe entlang der Förderstraße erfolgt durch das Spuleninnere, wobei - bei zwei Spulen - die Metallstäbe hintereinander die beiden Spulen durchlaufen. Das Raumgebiet, an dem das von der Spule erzeugte Wechselfeld am stärksten ist, ist somit gleich dem Raumgebiet, das die Metallstäbe durchlaufen (das Spuleninnere). Dort ist auch die Beeinflussung der Schwingungsfrequenz der Oszillatorspulen durch den Metallstab am ausgeprägtesten.

In einer bevorzugten Ausgestaltung weist jede Spule nur eine einzige Windung auf. Die eine Spule dient der Detektion der Stabkante eines Metallstabs. Mit Hilfe der weiteren Spule wird die Geschwindigkeit des Metallstabs berechnet. Spulen mit nur einer Windung erlauben einen hochfrequente Betrieb des Oszillators, da kleine Induktivitäten realisiert werden können.

Vorzugsweise sind die Oszillatoren als Hochfrequenzoszillatoren ausgebildet, die jeweils ein hochfrequentes Wechselfeld als elektromagnetisches Feld erzeugen. Die Resonanzfrequenz des leerlaufenden Systems ist dabei auf die Verhältnisse in einem Walzwerk optimal abgestimmt und beträgt zwischen 10 und 100 MHz, besonders bevorzugt mehr als 25 MHz. Bei diesen hohen Frequenzen liegt mit Vorteil eine geringe Eindringtiefe der elektromagnetischen Strahlung vor und werden ferromagnetische und ferritische Effekte weitgehend vermieden. Ein Metallstab im Wechselfeld eines Oszillators verschiebt dessen Resonanzfrequenz, die besonders einfach detektierbar ist.

In einer Ausführungsform weist die Sensoranordnung zudem ein Auswertmittel auf, das aus den vom Messgerät gemessenen zeitabhängigen Frequenzen den zugehörigen Metallstabtyp, seine Fördergeschwindigkeit und seine Position bestimmt. Diese Größen werden jeweils für den Metallstab bestimmt, der die zeitabhängigen Frequenzänderungen verursacht hat.

Die Metallstabposition ergibt sich dabei aus dem Zeitpunkt, an dem der Metallstab zum ersten Mal so tief in das zum Oszillator gehörige Raumgebiet eintritt, dass er dessen Frequenz messbar beeinflusst. Aus der Zeitdifferenz des Eintritts in das erste Raumgebiet und in das zweite Raumgebiet berechnet das Auswertmittel bei Nutzung zweier Spulen die Fördergeschwindigkeit. Durch Kenntnis der Position und der Geschwindigkeit kann eine Bewegungsgleichung des Metallstabes aufgestellt werden, so dass entlang der Förderstraße befindliche Verarbeitungsvorrichtungen entsprechend koordiniert werden können. Der Metallstabtyp wird vom Auswertmittel anhand der berechneten Metallstaboberfläche identifiziert.

In einer erfindungsgemäßen Weiterbildung erfolgt die Messung und die Auswertung der zeitabhängigen Frequenzen des oder der Oszillatoren im ms-Bereich, so dass auch Metallstäbe, die mit einer hohen Geschwindigkeit durch die Förderstraße befördert werden, schnell identifiziert werden können. So werden die zu messenden Messgrößen mit einer Antwortzeit im ms-Bereich erfasst, was auch bei hohen Fördergeschwindigkeiten eine optimale Automatisierung der Metallverarbeitungsanlage ermöglicht.

In einer Ausführungsform sind zwei Oszillatoren durch einen einstellbaren, bekannten Abstand voneinander getrennt angeordnet. Der Abstand zwischen den Oszillatoren dient zur Berechnung der Metallstabfördergeschwindigkeit und kann gegebenenfalls an diese angepasst werden.

Der oder die Oszillatoren bzw. deren Spulen bestehen vorzugsweise aus Edelstahl, wobei auch ein Trägermaterial der Oszillatoren zumindest teilweise durch Edelstahleinschlüsse vor Zertrümmerung geschützt wird. Edelstahl ist zum einen besonders hitzebeständig, zum anderen sehr stabil.

Die Sensoranordnung ist bevorzugt zur Verwendung in einem Stabstahlwalzwerk als Metallverarbeitungswerk ausgebildet und vorgesehen, wobei als Metallstäbe Stahlstäbe entlang der Förderstraße befördert werden. Die Anforderungen an eine solche Sensoranordnung sind dabei besonders hoch, da hier Temperaturen über 1000°C sowie Temperaturen unterhalb 200°C vorkommen können. Die Wirkungsweise des erfindungsgemäßen Sensors wird durch diese Temperaturen nicht beeinflusst.

Die erfindungsgemäße Aufgabe wird weiterhin durch ein Verfahren nach Anspruch 22 gelöst, bei dem Metallstäbe entlang einer Förderstraße befördert werden, die eine Sensoranordnung nach einem der vorangegangenen Ansprüche aufweist. Dabei misst das Messgerät der Sensoranordnung bei der Beförderung eines Metallstabes durch das Raumgebiet die von dem Metallstab beeinflusste, zeitabhängige Frequenz des von dem mindestens einen Oszillator erzeugten Wechselfelds und wertet ein Auswertmittel die gemessene zeitabhängige Frequenz aus. Es wertet das Auswertmittel die gemessene Frequenz so aus, dass es einen Metallstabtyp, eine Metallstabfördergeschwindigkeit und/oder eine Metallstabposition des Metallstabes bestimmt, dessen Beförderung durch das Raumgebiet die zeitabhängige Frequenz beeinflusst.

Die Erfindung wird im Folgenden anhand mehrerer in den Figuren dargestellter Ausführungsbeispiele näher erläutert. Es zeigen:
- Fig. 1: einen schematischen Längsschnitt durch eine erfindungsgemäße Sensoranordnung mit zwei entlang einer Förderstraße hintereinander angeordneten Spulen,
- Fig. 2: einen schematischen Querschnitt durch die Sensoranordnung der Figur 1,
- Fig. 3: eine Ausgestaltung der Sensoreinrichtung der Fig. 1, bei der die beiden Spulen jeweils nur eine Windung aufweisen, und
- Fig. 4: eine Führungs- und Detektionseinrichtung 30 für ein Stabstahlwalzwerk mit einer Sensoreinrichtung gemäß den Figuren 1 bis 3.

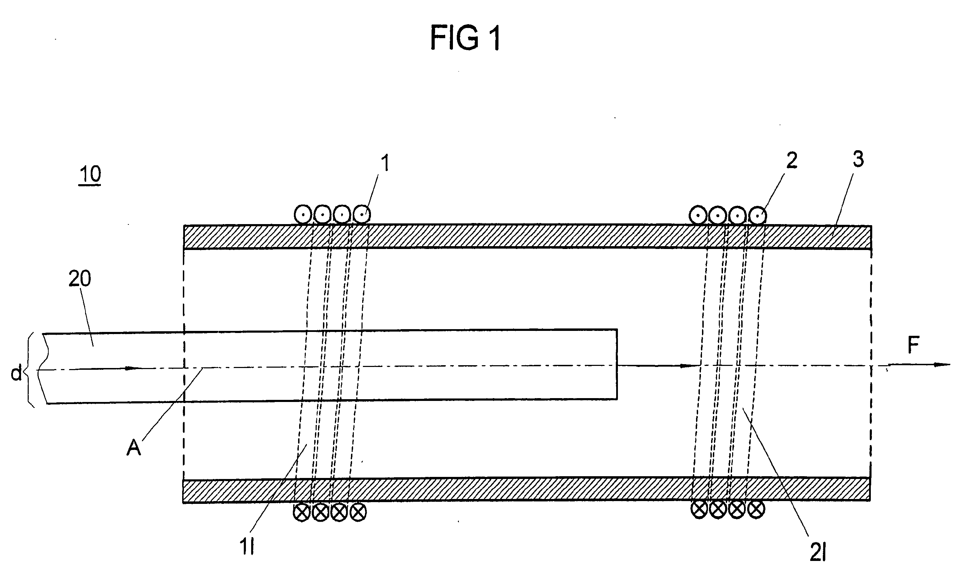

Die Figur 1 zeigt in einem schematischen Längsschnitt durch eine erfindungsgemäße Sensoranordnung 10 einen Ausschnitt einer Förderstraße F eines Stabstahlwalzwerkes zur Stahlproduktion. Exemplarisch ist ein Metallstab 20 gezeigt, der entlang der Förderstraße F durch einen Träger 3 zweier Spulen 1 und 2 befördert wird. Dabei passiert der Metallstab 20 entlang der gemeinsamen Achse A der beiden Spulen 1 und 2 das Spuleninnere 1l der ersten Spule 1 und das Spuleninnere 2l der zweiten Spule 2.

Auf seinem Weg entlang der Förderstraße F wird der Metallstab 20 zentral in den zylinderförmigen Träger 3 eingeführt. Danach wird der Metallstab 20 in das Spuleninnere 11 der ersten Spule 1 befördert. Die erste Spule 1 besteht aus einer oder mehreren Drahtwindungen, die um den Träger 3 gewickelt sind. An der ersten Spule 1 liegt ein hochfrequenter Wechselstrom an, der von einer nicht dargestellten Hochfrequenzstromquelle erzeugt wird und der im Spuleninneren 11 der ersten Spule 1 ein hochfrequentes elektromagnetisches Wechselfeld erzeugt. Die hochfrequente Wechselspannung wird von einer elektrischen Oszillatorschaltung erzeugt, mit der die Windungen der ersten Spule 1 in elektrischem Kontakt stehen. Die erste Spule 1 erzeugt das zur Detektion benötigte elektromagnetische Wechselfeld. Die Oszillatorschaltung zusammen mit der ersten Spule 1 bilden einen elektromagnetischen Oszillator im Sinne des Anspruchs 1.

Beim Eindringen des Metallstabes 20 ins Spuleninnere 11 der ersten Spule 1 werden durch das Wechselfeld auf der Oberfläche des Metallstabes 20 induktionsbedingt elektromagnetische Wirbel erzeugt, die dem Wechselfeld der Spule 1 entgegengerichtet sind und dadurch einen Induktionswiderstand für die erste Spule 1 bilden. Die Stärke des Induktionswiderstands richtet sich nach dem Durchmesser d des Metallstabes 20. Der Metallstab 20 ist dabei entweder rund oder eckig ausgebildet. Die Oberfläche des Metallstabes 20 bzw. deren Abstand von den Windungen der ersten Spule 1 legen die Stärke des Induktionswiderstandes fest. Bei einem runden Metallstab bestimmt allein der Durchmesser d und die Materialeigenschaften den Induktionswiderstand.

Der Induktionswiderstand im Spuleninneren 11 bewirkt weiterhin eine Änderung der Frequenz, mit der die erste Spule 1 das elektromagnetische Wechselfeld erzeugt. Die Frequenz wird von einem nicht dargestellten Messgerät gemessen und von einem nicht dargestellten Auswertmittel in den Induktions- bzw. Impedanzwiderstand umgerechnet, woraus sich der Durchmesser und somit der Metallstabtyp bestimmen lässt. Üblicherweise gibt es in Metallverarbeitungswerken eine feste Anzahl von unterschiedlichen Metallstabtypen, denen die Sensoranordnung 10 problemlos die detektierten Werte zuordnen kann. Beispielsweise wird eine gemessene Frequenzänderung mit charakteristischen Werten und/oder spezifischen Frequenzverläufen verglichen, die in einem nicht dargestellten Speicher abgelegt sind. Zusätzlich wird der Zeitpunkt festgehalten, an dem der Metallstab 20 ins Spuleninnere 1 eingetreten ist.

Die zweite Spule 2 ist analog zur ersten Spule 1 aufgebaut und befindet sich entlang der Förderstraße F versetzt auf einem gemeinsamen Träger 3 der beiden Spulen. Auch die zweite Spule 2 erzeugt ein elektromagnetisches Wechselfeld mit einer spezifischen, messbaren Frequenz, wobei sich die Frequenz des von der zweiten Spule 2 erzeugten Wechselfeldes bei Eintritt des Metallstabes 20 in das Spuleninnere 21 der zweiten Spule verändert. Der Eintritt in das Spuleninnere 21 wird ebenfalls durch ein Messgerät registriert. Dabei ist für jede Spule jeweils ein Messgerät vorgesehen, das die Daten zu einem gemeinsamen Auswertmittel wie z.B. einem PC oder einer Steuereinheit übersenden. Aus dem zeitlichen Versatz zwischen den Gradienten beider Oszillatorfrequenzen wird die Fördergeschwindigkeit des Metallstabes 20 berechnet. Zusätzlich wird an jeder der beiden Spulen 1 und 2 die Position des Metallstabes detektiert.

Somit wird durch die Sensoranordnung 10 zugleich der Typ, die Geschwindigkeit und die Position des Metallstabes 20 detektiert.

Das Spuleninnere 11 und 21 der ersten und zweiten Spule stellt jeweils ein Raumgebiet dar, in dem die Spulen als Oszillatoren ein elektromagnetisches Wechselfeld erzeugen. Die beiden Raumgebiete sind dabei voneinander beabstandet, so dass die Metallstäbe zu deutlich getrennten Zeiten in die Raumgebiete eintreten.

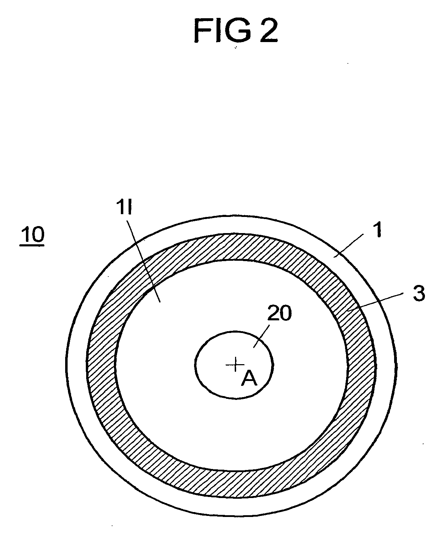

Die Figur 2 zeigt schematisch einen Querschnitt senkrecht zur Zylinderachse des Trägers 3 durch die in Figur 1 gezeigte Sensoranordnung 10. Der Schnitt wurde dabei auf Höhe der ersten Spule 1 und durch das Spuleninnere 1l der ersten Spule 1 durchgeführt.

In einer alternativen Ausführung können auch zwei separate Träger für die beiden Spulen vorgesehen sein. In einer speziellen Ausführungsform sind zwei ringförmige Hochfrequenzspulen im Abstand von 40 mm auf einem keramischen, rohrförmigen Träger mit einem Durchmesser von 100 mm vorgesehen. Die Spulen sind Teil jeweils eines Schwingkreises, der jeweils ein elektromagnetisches Wechselfeld mit einer Frequenz von ca. 30 MHz erzeugt. Die Spulen sind dabei soweit voneinander beabstandet, dass sich ihre elektromagnetischen Wechselfelder gegenseitig nicht beeinflussen. Im Arbeitsbereich steigt die Resonanzfrequenz im Versuch nahezu proportional zum Durchmesser d des Metallstabes 20. Damit handelt es sich bei dem Messeffekt nicht um die Veränderung der relativen Permeabilität, sondern des Induktionswiderstandes. Die beiden Spulen 1 und 2 sind identisch zueinander aufgebaut und erzeugen ein Wechselfeld mit einer Frequenz gleicher Größenordnung, was die Auswertung der Messergebnisse vereinfacht.

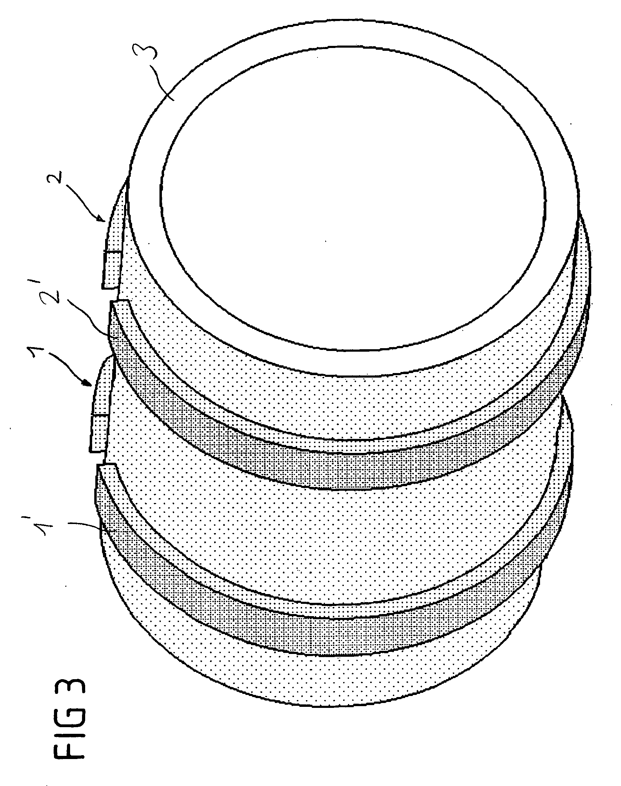

Die Figur 3 zeigt ein Ausführungsbeispiel der Sensoranordnung der Figur 1, bei der die beiden Spulen 1, 2 jeweils aus nur einer Windung 1', 2' bestehen. Durch die Verwendung nur einer Windung ist es möglich, eine hohe Resonanzfrequenz im Bereich von bevorzugt größer 25 MHz zu realisieren. So bilden jeweils die Spulenwindung 1', 2' sowie die Kabelkapazität der Zuleitungen und ggf. weitere Kapazitäten einen Parallelschwingkreis. Je kleiner die Induktivität der Spulenwindung ist, desto höher ist die Resonanzfrequenz.

Die jeweils einzelne Windung 1', 2' ist um den bevorzugt aus Keramik bestehenden Träger 3 gelegt. Die Windungen 1', 2' bestehen beispielsweise aus Aluminium, können jedoch auch aus anderen leitenden Materialen wie z.B. Kupfer oder Stahl bestehen. Die Spulenwindungen 1', 2' sind im Querschnitt flach ausgebildet, d.h. ihre Breite ist größer als ihre Dicke. Sie sind im Schnitt rechteckig. Das Verhältnis von Breite zu Dicke liegt bevorzugt zwischen 3:1 und 7:1, besonders bevorzugt bei 5:1.

Jede Spule 1, 2 bzw. jede Spulenwindung 1', 2' ist, jedenfalls im Zeitpunkt der Signaldetektion, mit einer hochfrequenten Wechselspannung beaufschlagt, die über nicht dargestellte Zuleitungen angelegt wird. Die hochfrequente Wechselspannung wird durch eine elektrische Oszillatorschaltung erzeugt (nicht dargestellt). Die elektrische Oszillatorschaltung versorgt den Schwingkreis, der infolge von ohmschen Dämpfungsverlusten eine gedämpfte Schwingung ausführen würde, regelmäßig wieder mit Energie. Die Oszillatorschaltung und die Spule bilden einen elektromagnetischen Oszillator. Es sind nun verschiedene Anordnungen denkbar.

In einer ersten, bevorzugten Anordnung ist lediglich eine elektrische Oszillatorschaltung vorgesehen. Die hochfrequente Wechselspannung wird zunächst an die eine Spule 1 angelegt und es wird durch ein Messgerät eine Frequenzänderung erfasst und durch eine Auswerteinheit ausgewertet. Die andere Spule 2 ist zu diesem Zeitpunkt nicht an eine elektrische Oszillatorschaltung angeschlossen. Der Vorteil ist, dass die Messung der Frequenzänderung durch die eine Spule 1 nicht beeinflusst wird durch die andere Spule 2. Nach einer Messzeit ΔT wird die elektrische Oszillatorschaltung mit der anderen Spule 2 verbunden, so dass eine hochfrequente Wechselspannung nun an dieser anliegt. Es wird jetzt das Signal der anderen Spule 2 dem Messgerät zugeführt und ausgewertet. Die Spulen 1, 2 werden also sequentiell angesteuert und deren Signal sequentiell ausgewertet. Der Wechsel der Ansteuerung der Spulen 1, 2 kann dabei je nach Anforderung beispielsweise im Sekunden- oder auch im Millisekundenbereich erfolgen.

In einer zweiten, alternativen Anordnung sind zwei elektrische Oszillatorschaltungen vorgesehen, die jeweils eine hochfrequente Wechselspannung an die jeweiligen Spulen 1, 2 anlegen. Es wird somit gleichzeitig ein Signal (d.h. die Änderung der Resonanzfrequenz) an beiden Spulen gemessen und dem Messgerät zugeführt. Diese Variante ist insbesondere dann sinnvoll, wenn die Spulen 1, 2 derart weit auseinander liegen, dass sie sich nicht wesentlich beeinflussen.

Bei Einführen eines Metallstabes in das Raumgebiet eines Oszillators ändert sich die Frequenz des Oszillators. Dies hängt damit zusammen, dass im Metallstab Wirbelströme erzeugt werden, die dem elektromagnetischen Wechselfeld entgegenwirken und zu einem Anstieg der Resonanzfrequenz führen. Aufgrund der hohen Resonanzfrequenz von bevorzugt 25 MHz liegt dabei eine geringe Eindringtiefe des elektromagnetischen Wechselfeldes in den Metallstab vor, d.h. die Verluste werden allein durch Wirbelstromverluste erzeugt. Ferromagnetische oder ferritische Effekte werden dagegen weitgehend vermieden.

Bei der Verwendung zweier Spulen gemäß den Figuren 1 bis 3 weisen in einer Ausgestaltung die beiden Spulen 1, 2 eine unterschiedliche Breite auf (insbesondere weisen die einzelnen Windungen 1', 2' der Fig. 3 eine unterschoedliche Breite auf). Dies weist den Vorteil auf, dass aufgrund unterschiedlicher, nicht linear zusammenhängender Messeffekte der beiden Spulen eine Störkompensation vorgenommen werden kann.

Es wird darauf hingewiesen, dass in den Ausführungsbeispielen der Figuren 1 bis 3 die Verwendung zweier Spulen zwar bevorzugt, jedoch nicht notwendig ist. Es ist ebenfalls denkbar, dass nur eine Spule verwendet wird. Auch in diesem Fall ist durch Auswertung der Frequenzgradienten eine Messung der Fördergeschwindigkeit des Metallstabs 20 möglich. Alternativ kann die beschriebene zweite Spule verwendet werden.

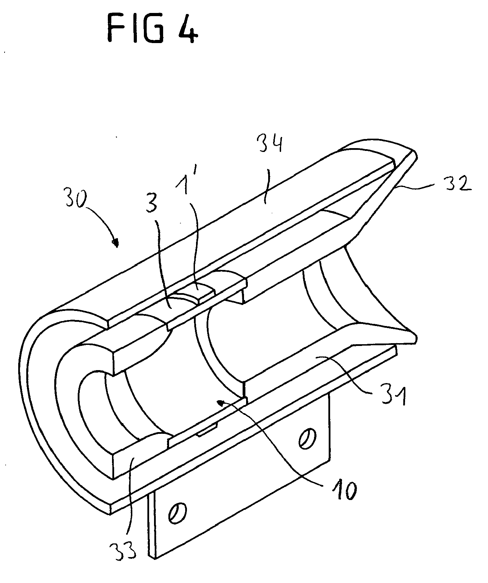

Die Figur 4 zeigt eine Führungs- und Detektionseinrichtung 30, wie sie in einem Stabstahlwalzwerk zur Stahlproduktion eingesetzt wird. Die Führungs- und Detektionseinrichtung 30 weist eine vordere innere Stahlhülse 31, die sich eingangsseitig zu einem Trichter 32 erweitert, eine innere hintere Stahlhülse 33, eine zwischen den beiden inneren Stahlhülsen 31, 33 ausgebildete Sensoranordnung 10 sowie eine äußere Stahlhülse 34 auf. Die Sensoreinrichtung 10 ist eine in den Figuren 1 bis 3 beschriebene Sensoreinrichtung. Im dargestellten Ausführungsbeispiel ist eine Spule bestehend aus einer Windung 1' vorgesehen. Der Träger 3 der Sensoreinrichtung 10 ist gegenüber der vorderen inneren Stahlhülse 31 und der hinteren inneren Stahlhülse 33 radial nach außen versetzt, so dass er nicht von einem eingeführten Metallstab beschädigt werden kann. Er besteht bevorzugt aus Keramik oder einem anderen nichtleitenden Material.

Ein Metallstab wird trichterseitig in die vordere innere Stahlhülse 31 eingeführt. Die Länge der vorderen inneren Stahlhülse 31 ist so bemessen, dass auch bei schräg eingeführtem Metallstab nicht die Gefahr einer Beschädigung des Trägers 3 besteht. Die Sensoranordnung 10 misst dann die Metallstabposition und den Metallstabtyp sowie, wenn zwei Spulen vorgesehen sind, die Metallstabfördergeschwindigkeit. Über die hintere innere Stahlhülse 33 verlässt der Metallstab die Führungs- und Detektionseinrichtung 30. Das äußere Hüllrohr 34 ist mit den inneren Hülsen 31, 33 bevorzugt verschweißt und dient der Aufnahme von Kräften, etwa wenn ein Metallstab beim Einführen gegen den eintrittsseitigen Trichter 32 stößt.

## Patentansprüche

1. Sensoranordnung zur Identifizierung und Ortung von Metallstäben in einem Metallverarbeitungswerk mit
- mindestens einem elektromagnetischen Oszillator (1, 2), der ein elektromagnetisches Wechselfeld in einem Raumgebiet (1I, 2I) einer Förderstraße (F) für die Metallstäbe (20) erzeugt, und
- zumindest einem Messgerät, das die Frequenz des elektromagnetischen Wechselfelds in Abhängigkeit von der Zeit misst, wobei
- der mindestens eine Oszillator (1, 2) so nah an der Förderstraße (F) angeordnet ist, dass eine Positions- und/oder eine Oberflächenänderung und/oder die Geschwindigkeit eines Metallstabes (20) in dem Raumgebiet (1I, 2I) eine vom Messgerät messbare Änderung der Frequenz des Wechselfeldes in dem Raumgebiet (11; 21) bewirkt.

2. Sensoranordnung nach Anspruch 1, **dadurch gekennzeichnet, dass** der mindestens eine Oszillator (1, 2) so nah an der Förderstraße (F) angeordnet ist, dass eine Positions- und/oder eine Oberflächenänderung eines Metallstabes (20) in dem Raumgebiet (1I, 2I) eine von dem Messgerät messbare Veränderung der Impedanz des Oszillators (1; 2) und somit der Frequenz des vom Oszillator (1; 2) erzeugten Wechselfeldes bewirkt.

3. Sensoranordnung nach Anspruch 1 oder 2, **dadurch gekennzeichnet, dass** der mindestens eine Oszillator (1, 2) eine Spule (1; 2) als frequenzbestimmendes Glied aufweisen, wobei die Spule (1, 2) das elektromagnetische Wechselfeld erzeugt.

4. Sensoranordnung nach Anspruch 3, **dadurch gekennzeichnet, dass** die mindestens eine Spule (1, 2) zumindest eine stromdurchflossene Windung aufweist, die um die Förderstraße (F) herum so ausgebildet ist, dass die Metallstäbe (20) durch das Spuleninnere (11; 21) der Spule (1; 2) befördert werden.

5. Sensoranordnung nach Anspruch 3, **dadurch gekennzeichnet, dass** die Spule (1, 2) genau eine Windung (1', 2') aufweist.

6. Sensoranordnung nach Anspruch 5, **dadurch gekennzeichnet, dass** die genau eine Windung (1', 2') im Querschnitt flach ausgebildet ist.

7. Sensoranordnung nach einem der vorangegangen Ansprüche, **dadurch gekennzeichnet, dass** der Oszillatore (1, 2) als Hochfrequenzoszillatoren (1, 2) ausgebildet ist, der ein hochfrequentes Wechselfeld als elektromagnetisches Wechselfeld erzeugt.

8. Sensoranordnung nach Anspruch 7, **dadurch gekennzeichnet, dass** das von dem Oszillator (1, 2) abgestrahlte Wechselfeld eine Frequenz zwischen 10 bis 100 MHz, insbesondere zwischen 20 bis 40 MHz aufweist.

9. Sensoranordnung nach einem der vorangegangenen Ansprüche, **gekennzeichnet durch** ein Auswertmittel, dass aus den vom Messgerät gemessenen, zeitabhängigen Frequenzen einen Metallstabtyp, eine Metallstabfördergeschwindigkeit und/oder eine Metallstabposition des Metallstabes (20) bestimmt.

10. Sensoranordnung nach Anspruch 9, **dadurch gekennzeichnet, dass** der Metallstabtyp vom Auswertmittel anhand einer detektierten Metallstabsoberfläche identifiziert wird.

11. Sensoranordnung nach einem der vorangegangen Ansprüche, **dadurch gekennzeichnet, dass** die Sensoranordnung (10) zwei Spulen (1, 2) aufweist, die hintereinander entlang der Förderstraße (F) angeordnet sind, und die ein elektromagnetisches Wechselfeld in je einem von zwei Raumgebieten (1l, 2l) erzeugen, die entlang der Förderstraße (F) hintereinander angeordnet sind und durch die die Metallstäbe (20) während ihrer Verarbeitung im Metallverarbeitungswerk befördert werden, wobei
- das Messgerät die Frequenzen der beiden elektromagnetischen Wechselfelder in Abhängigkeit von der Zeit misst, und
- beide Spulen (1, 2) so nah an der Förderstraße (F) angeordnet sind, dass eine Positions- und/oder eine Oberflächenänderung eines Metallstabes (20) in einem der beiden Raumgebiete (1l, 2l) eine vom Messgerät messbare Änderung der Frequenz des Wechselfeldes in dem Raumgebiet (1l; 2l) bewirkt.

12. Sensoranordnung nach Anspruch 11, **dadurch gekennzeichnet, dass** die Messung und die Auswertung der zeitabhängigen Frequenzen der Spulen (1, 2) im Zeitabstand von 1 bis 100 Millisekunden zueinander erfolgen.

13. Sensoranordnung nach Anspruch 11 oder 12, **dadurch gekennzeichnet, dass** die beiden Spulen (1, 2) zur Berechnung der Metallstabgeschwindigkeit durch einen einstellbaren, bekannten Abstand voneinander beabstandet sind.

14. Sensoranordnung nach einem der Ansprüche 11 bis 13, **dadurch gekennzeichnet, dass** den beiden Spulen (1, 2) eine elektrische Oszillatorschaltung zugeordnet ist, die sequentiell die eine Spule (1) und die andere Spule (2) mit einer hochfrequenten Wechselspannung beaufschlagt.

15. Sensoranordnung nach der Anspruch 14, **dadurch gekennzeichnet, dass** die Spulen (1, 2) abwechselnd im Sekunden- oder Millisekundentakt mit einer hochfrequenten Wechselspannung beaufschlagt werden.

16. Sensoranordnung nach einem der Ansprüche 11 bis 13, **dadurch gekennzeichnet, dass** den beiden Spulen (1, 2) jeweils eine gesonderte elektrische Oszillatorschaltung zugeordnet ist, so dass zwei vollständig getrennte Oszillatoren vorliegen.

17. Sensoranordnung nach einem der vorangegangenen Ansprüche, **dadurch gekennzeichnet, dass** die Spule des mindestens einen Oszillators (1, 2) zumindest teilweise aus Edelstahl, Kupfer oder Aluminium besteht.

18. Sensoranordnung nach einem der vorangegangenen Ansprüche, **dadurch gekennzeichnet, dass** die Spule (1, 2) des mindestens einen Oszillators auf einem rohrförmigen Träger (3) angeordnet ist.

19. Sensoranordnung nach Anspruch 18, **dadurch gekennzeichnet, dass** der Träger (3) aus Keramik besteht.

20. Sensoranordnung nach einem der vorangegangenen Ansprüche, **dadurch gekennzeichnet, dass** die Sensoranordnung (10) zur Verwendung in einem Stabstahlwalzwerk als Metallverarbeitungswerk ausgebildet und vorgesehen ist, bei dem Stahlstäbe als Metallstäbe (20) entlang der Förderstraße (F) befördert werden.

21. Sensoranordnung nach einem der vorangegangenen Ansprüche **gekennzeichnet durch** ein Speichermittel, in dem typische zeitabhängige Frequenzverläufe gespeichert sind, die bekannten Metallstaboberflächen und/oder Metallstabtypen zugeordnet sind.

22. Verfahren zur Identifizierung und Ortung von Metallstäben in einem Metallverarbeitungswerk, wobei Metallstäbe entlang einer Förderstraße befördert werden, die eine Sensoranordnung nach einem der vorangegangenen Ansprüche aufweist, **dadurch gekennzeichnet, dass**
- das Messgerät der Sensoranordnung (1) bei der Beförderung eines Metallstabes (20) durch das Raumgebiet (11, 21) die von dem Metallstab (20) beeinflusste, zeitabhängige Frequenz des von dem mindestens einen Oszillator (1, 2) erzeugten Wechselfelds misst und
- ein Auswertmittel die gemessene zeitabhängige Frequenz auswertet,
- wobei das Auswertmittel die gemessene Frequenz so auswertet, dass es einen Metallstabtyp, eine Metallstabfördergeschwindigkeit und/oder eine Metallstabposition des Metallstabes (20) bestimmt, dessen Beförderung durch das Raumgebiet (11, 21) die zeitabhängige Frequenz beeinflusst.

23. Verfahren nach Anspruch 22, **dadurch gekennzeichnet, dass** der Metallstabtyp vom Auswertmittel anhand einer mittels der zeitabhängigen Frequenz bestimmten Metallstabsoberfläche identifiziert wird.

24. Verfahren nach Anspruch 22 oder 23, **dadurch gekennzeichnet, dass** das Auswertmittel den Verlauf der gemessenen zeitabhängigen Frequenz mit in einem Speichermittel gespeicherten Frequenzverläufen vergleicht, die typischen Frequenzverläufen bekannter Metallstaboberflächen und/oder Metallstabtypen entsprechen.

25. Verfahren nach einem der Ansprüche 22 bis 24, **dadurch gekennzeichnet, dass** zwei beabstandene Spulen vorgesehen sind, denen jeweils ein Raumgebiet zugeordnet ist, und die Metallstabfördergeschwindigkeit vom Auswertmittel aus einem Zeitunterschied berechnet wird, der zwischen dem Eintritt des Metallstabes (20) in jedes der beiden Raumgebiete liegt.

26. Verfahren nach einem der Ansprüche 22 bis 25, **dadurch gekennzeichnet, dass** die Metallstabposition des Metallstabes (20) vom Auswertmittel anhand des Eintritts in ein einer Spule (1, 2) zugeordnetes Raumgebiet (1I; 21) berechnet wird.

27. Verfahren nach einem der Ansprüche 22 bis 26, **dadurch gekennzeichnet, dass** bei Verwendung einer Spule (1, 2) die Metallstabfördergeschwindigkeit durch Auswerten von Gradienten der gemessenen Frequenzänderung ermittelt wird.
